# EUROPEAN PATENT APPLICATION

(11) **EP 1 175 058 A1**
(43) Date of publication of application: **23.01.2002**
(21) Application number: 00440218.6
(22) Date of filing: 21.07.2000
(51) Int. Cl.: H04L 29/06, H04N 7/50

(54) **Processor system, and terminal, and network-unit, and method**

(71) Applicant: ALCATEL, 75008 Paris (FR)
(72) Inventor: Vanvor, Nelly, 70469 Stuttgart (DE); Sienel, Jürgen, 71229 Leonberg (DE)
(74) Representative: van Bommel, Jan Peter

(57) **Abstract**

Processor systems in terminals or servers or network-units generate packet signals comprising content information blocks and overhead information blocks in a non-flexible way, resulting in a large overhead in case of one content information block being combined with one overhead information block, and resulting in a risk of being unable to correct all possible errors in case of several content information blocks being combined with one overhead information block. By generating an indication signal representing a similarity/non-similarity in content information blocks and by comparing said indication signal with a threshold signal, and combining either one information block and one overhead information block in case of too many/large non-similarities being present in content information blocks, or combining two or more information blocks and one overhead information block in case of sufficient similarities being present in said two or more content information blocks, a more flexible processor system has been created.

## Description

The invention relates to a processor system for generating packet signals comprising content information blocks and overhead information blocks.

Such a processor system is of common general knowledge and used in packet-switched networks comprising packet-switched terminals and/or packet-switched network-units. Said content information block is for example a 32 byte data signal, and said overhead information block is for example an 8 byte header, together they form a 40 byte packet signal.

Such a processor system is disadvantageous, inter alia, due to being flexible insufficiently.

It is an object of the invention, inter alia, to provide a processor system as defined in the preamble, which is more flexible.

Thereto, the processor system according to the invention is characterised in that said processor system comprises a generator for generating at least one indication signal representing at least one similarity/non-similarity in at least a first number of content information blocks and comprises a comparator for comparing at least one indication signal with at least one threshold signal and, in dependence of at least one comparison result, combining at least a second number of content information blocks and one overhead information block into one packet signal, with said second number being equal to or smaller than said first number.

By introducing said generator and said comparator in said processor system (like for example a server), each packet signal has got a flexible length, due to comprising said second number (one or more) of content information blocks and one overhead information block, in dependence of a similarity/non-similarity in said first number (two or more) of content information blocks.

The invention is based on the insight, inter alia, that after error detection, like for example the loss of a packet signal, error correction should take place, for example by interpolating at least one or more other packets signal situated in time before and/or after said lost packet signal. As a result, when content information blocks are more alike, more content information blocks can be combined together with one overhead information block into one packet signal. When content blocks are completely different from one another, they are not to be combined, and one content information block is to be combined with one overhead information block into one packet signal.

The invention solves the problem, inter alia, of providing a more flexible processor system, and as a consequence, said processor system has a higher efficiency.

Said similarity/non-similarity in for example two content information blocks could be a real difference (or equality) bit per bit (in which case said indication signal and/or threshold signal for example may have the same length in number of bits as both content information blocks, or said threshold signal for example may have a numerical value representing the threshold number of bits which must be equal or different, etc.), or could be a numerical difference byte per byte (in which case said threshold signal for example may comprise a numerical value per byte and define the number of values which must be smaller or larger etc.), or could be a difference (or equality) in power (square root construction whereby both content information blocks do not need to have the same length), or could be - in case both content information blocks define values/amplitudes of frequency-components - a real difference (or equality) or a difference (or equality) in power per frequency-component, etc.

Said similarity/non-similarity in said first number of content information blocks does not exclude said first number being three or more. In case of said first number being three, for example either three pairs of content signals are analysed resulting in three indication signals or for example one of said content information blocks is doubled and then compared with a sum of the other two, etc. In case of said first number being four, for example either six pairs of content signals are analysed resulting in six indication signals or for example one of said content information blocks is multiplied by three and then compared with a sum of the other three, or a sum of the first and second content information block is compared with a sum of the third and fourth content information block, or a difference between the first and the third content information block is compared with a difference between the second and the fourth content information block, etc. In case of said first number being five, etc.

A first embodiment of the processor system according to the invention is characterised in that said processor system comprises a processor for, in response to receiving content information blocks, processing overhead information blocks.

By introducing said processor, said processor system can process overhead information blocks, like for example generating overhead information blocks in response to said receiving (and for example after analysis) of content information blocks and/or like converting further blocks received. Such overhead information blocks for example comprise an address of a source, an address of a destination, a frame counter, real-time information, a length of a frame and/or a number of frames, etc. Of course, said processor may further take care of said generating and/or comparing and/or combining, thereby implementing said generator and/or comparator, etc.

A second embodiment of the processor system according to the invention is characterised in that processor system comprises a man-machine-interface for receiving audio/video signals and a converter for converting said audio/video signals into said content information blocks.

By introducing said man-machine-interface or mmi, like a microphone for receiving audio and/or a camera for receiving video, and said converter, like a Fast Fourier Transformator or FFT and further possibly comprising a filter, real-time audio and/or video can be transmitted from a terminal to a network flexibly and efficiently.

A third embodiment of the processor system according to the invention is characterised in that said processor system comprises an input for receiving further packet signals comprising said content information blocks and further overhead information blocks.

By introducing said input, real-time audio and/or video can be transported via a network like a network-unit flexibly and efficiently.

The invention further relates to a terminal comprising a man-machine-interface for receiving audio/video signals and a converter for converting said audio/video signals into content information blocks and a processor system for generating packet signals comprising said content information blocks and overhead information blocks.

The terminal according to the invention is characterised in that said processor system comprises a generator for generating at least one indication signal representing at least one similarity/non-similarity in at least a first number of content information blocks and comprises a comparator for comparing at least one indication signal with at least one threshold signal and, in dependence of at least one comparison result, combining at least a second number of content information blocks and one overhead information block into one packet signal, with said second number being equal to or smaller than said first number.

A first embodiment of the terminal according to the invention is characterised in that said processor system comprises a processor for, in response to receiving said content information blocks, processing overhead information blocks.

The invention also relates to a network-unit (like for example a switch, a bridge, a router, a hub etc.) comprising an input for receiving further packet signals comprising content information blocks and further overhead information blocks and a processor system for generating packet signals comprising said content information blocks and overhead information blocks.

The network-unit according to the invention is characterised in that said processor system comprises a generator for generating at least one indication signal representing at least one similarity/non-similarity in at least a first number of content information blocks and comprises a comparator for comparing at least one indication signal with at least one threshold signal and, in dependence of at least one comparison result, combining at least a second number of content information blocks and one overhead information block into one packet signal, with said second number being equal to or smaller than said first number.

A first embodiment of the network-unit according to the invention is characterised in that said processor system comprises a processor for, in response to receiving said content information blocks and said further overhead information blocks, processing overhead information blocks.

The invention also further relates to a method for generating packet signals comprising content information blocks and overhead information blocks.

The method according to the invention is characterised in that said method comprises a first step of generating at least one indication signal representing at least one similarity/non-similarity in at least a first number of content information blocks and comprises a second step of comparing at least one indication signal with at least one threshold signal and comprises a third step of, in dependence of at least one comparison result, combining at least a second number of content information blocks and one overhead information block into one packet signal, with said second number being equal to or smaller than said first number.

A first embodiment of the method according to the invention is characterised in that said method comprises a fourth step of, in response to receiving content information blocks, processing overhead information blocks.

Further embodiments of the method according to the invention are in line with the embodiments of the processor system according to the invention.

Said processor system according to the invention could for example be used in a Distributed Speech Recognition environment (DSR), like a terminal and/or a network. The document US 5,809,464 discloses a dictating mechanism based upon distributed speech recognition (DSR). Other documents being related to DSR are for example EP00440016.4 and EP00440057.8. The document EP00440087.5 discloses a system for performing vocal commanding. The document US 5,794,195 discloses a start/end point detection for word recognition. The document US 5,732,141 discloses a voice activity detection. Neither one of these documents discloses the processor system according to the invention. All references including further references cited with respect to and/or inside said references are considered to be incorporated in this patent application.

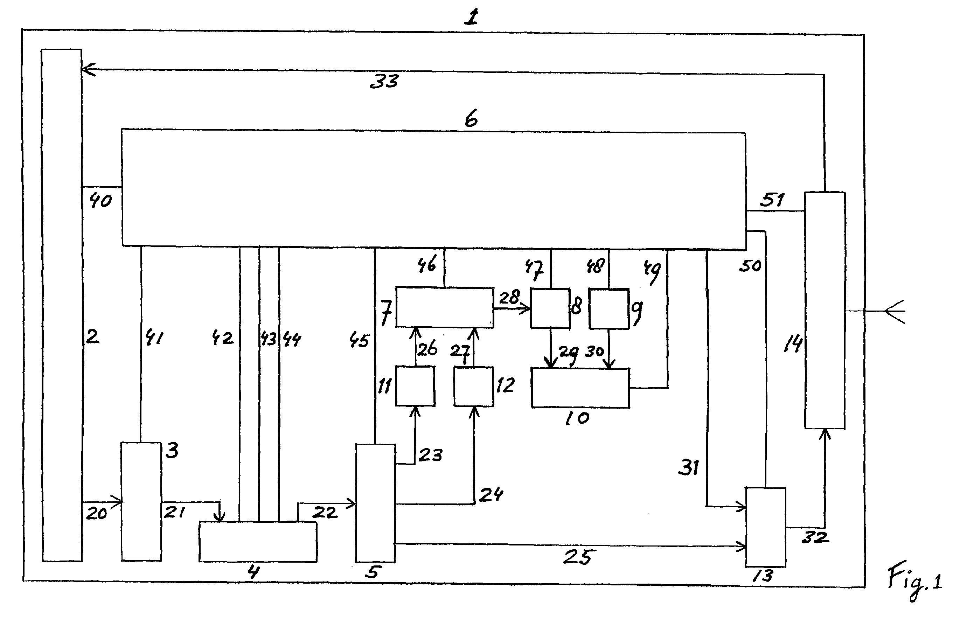

The invention will be further explained at the hand of an embodiment described with respect to a drawing, whereby
figure 1 discloses a terminal according to the invention comprising a processor system according to the invention.

The terminal 1 according to the invention as shown in figure 1 comprises the processor system 6,7,8,9,10 according to the invention and comprises a man-machine-interface 2 (mmi 2) and a converter 3 and a memory 4 and a selector 5 and a first buffer 11 and a second buffer 12 and a combiner 13 and a transceiver 14.

Processor system 6,7,8,9,10 comprises a processor 6 and an analyser 7 and an indication signal generator 8 and a threshold signal generator 9 and a comparator 10. An output of mmi 2 is coupled via a connection 20 to an input of converter 3 for example comprising an A/D-converter, a Fast Fourier Transformator or FFT and a filter for generating content information blocks for example comprising speech vectors in response to audio received via said mmi 2 and/or comprising image vectors in response to video received via said mmi 2. An output of converter 3 is coupled via a connection 21 to an input of memory 4 like for example a (dual ported) RAM. An output of memory 4 is coupled to an input of selector 5, of which a first output is coupled via a connection 23 to an input of buffer11 and of which a second output is coupled via a connection 24 to an input of buffer 12 and of which a third output is coupled via a connection 25 to a first input of combiner 13. An output of buffer 11 is coupled via a connection 26 to a first input of analyser 7, and an output of buffer 12 is coupled via a connection 27 to a second input of analyser 7, of which an output is coupled via a connection 28 to an input of indication signal generator 8, of which an output is coupled via a connection 29 to a first input of comparator 10. An output of threshold signal generator 9 is coupled via a connection 30 to a second input of comparator 10. An output of processor 6 is coupled via a connection 31 to a second input of combiner 13, of which an output is coupled via a connection 32 to an input of transceiver 14, of which an output is coupled via a connection 33 to an input of mmi 2 and of which an input/output is coupled to an antennae.

Processor 6 is coupled via a control connection 40 to mmi 2 and via a control connection 41 to converter 3 and via a control connection 42 (information) and a control connection 43 (read/write) and a control connection 44 (address) to memory 4 and via a control connection 45 to selector 5 and via a control connection 46 to analyser 7 and via a control connection 47 to indication signal generator 8 and via control connection 48 to threshold signal generator 9 and via a control connection 49 to comparator 10 and via a control connection 50 to combiner 13 and via a control connection 51 to transceiver 14.

The terminal 1 according to the invention comprising the processor system 6,7,8,9,10 according to the invention as shown in figure 1 functions as follows.

Via mmi 2, audio (and/or video) is received, for example speech entered via a microphone of mmi 2 (and/or images entered via a camera of mmi 2), and an analog speech signal is supplied via connection 20 to converter 3, which converts said analog speech signals into content information blocks like for example digital speech vectors. Via control connection 41, processor 6 controls said conversion and is informed of the result of said conversion, after which via connection 21 said content information blocks are supplied to memory 4, which informs processor 6 via control connection 42. In response, via control connection 43 and control connection 44, processor 6 orders memory 4 to store a first content information block (first speech vector) at a first address, a second content information block (second speech vector) at a second address etc. Then, processor 6 orders via control connection 43 and control connection 44 memory 4 to read out said first content information block, and controls via control connection 45 selector 5 in such a way that said first content information block is supplied via said first output of selector 5 and connection 23 to first buffer 11 and via connection 26 to said first input of analyser 7, and orders via control connection 43 and control connection 44 memory 4 to read out said second content information block, and controls via control connection 45 selector 5 in such a way that said second content information block is supplied via said second output of selector 5 and connection 24 to second buffer 12 and via connection 27 to said second input of analyser 7.

Analyser 7 informs processor 6 via control connection 46 of said arrival and performs an analysis like for example taking the difference bit per bit of both content information signals, and supplies a difference signal via connection 28 to indication signal generator 8, which informs processor 6 via control connection 47 and generates an indication signal for example by adding the bits having the value 'one' in said difference signal. Said indication signal having then a numerical value is then supplied via connection 29 to said first input of comparator 10, and processor 6 orders via control connection 48 threshold signal generator 9 to generate a threshold signal and to supply it via connection 30 to said second input of comparator 10, which compares both signals and informs processor 6 via control connection 49 of a comparison result.

In case of a first comparison result (due to said indication signal being larger than or for example equal to said threshold signal), processor 6 generates a first overhead information signal (like for example a first header comprising a source identification and/or a destination identification and/or a packet counter and/or a frame counter and/or real time information and/or a length of a content information signal and/or a length of an overhead signal and/or a length of a packet signal and/or application information etc.) and supplies it via connection 31 to said second input of combiner 13, and orders memory 4 via control connection 43 and control connection 44 to read out said first content information signal and to supply it via connection 22 to selector 5 and controls selector 5 via control connection 45 in such a way that said first content signal is supplied via connection 25 to said second input of combiner 13, and controls combiner 13 via control connection in such a way that a first packet signal comprising said first overhead information signal and said first content information signal via connection 32 is supplied to transceiver 14, which transmits said first packet signal to a network. Then processor 6 generates a second overhead information signal and supplies it via connection 31 to said second input of combiner 13, and orders memory 4 via control connection 43 and control connection 44 to read out said second content information signal and to supply it via connection 22 to selector 5 and controls selector 5 via control connection 45 in such a way that said second content signal is supplied via connection 25 to said second input of combiner 13, and controls combiner 13 via control connection in such a way that a second packet signal comprising said second overhead information signal and said second content information signal via connection 32 is supplied to transceiver 14, which transmits said second packet signal to said network. As a result of insufficient similarities and/or too many/large non-similarities (differences), said first packet signal (comprising said first header and said first speech vector) and said second packet signal (comprising said second header and said second speech vector) are transmitted separately to said network. In case of a loss of one packet signal, said lost packet signal can be reconstructed by interpolating the other one and/or by interpolating at least one or more other packet signals situated in time before and/or after said lost packet signal.

In case of a second comparison result (due to said indication signal being smaller than said threshold signal), processor 6 generates a third overhead information signal (like for example a third header comprising a source identification and/or a destination identification and/or a packet counter and/or a frame counter and/or real time information and/or a length of a content information signal and/or a length of an overhead signal and/or a length of a packet signal and/or application information etc.) and supplies it via connection 31 to said second input of combiner 13, and orders memory 4 via control connection 43 and control connection 44 to read out said first content information signal as well as said second content signal and to supply both via connection 22 to selector 5 and controls selector 5 via control connection 45 in such a way that both said first and second content signals are supplied via connection 25 to said second input of combiner 13, and controls combiner 13 via control connection in such a way that a third packet signal comprising said third overhead information signal and both said first and second content information signals via connection 32 is supplied to transceiver 14, which transmits said third packet signal to said network. As a result of sufficient similarities and/or insufficient non-similarities (differences), said third packet signal (comprising said third header and said first and second speech vectors) is transmitted instead of both separate first and second packet signals. In case of a loss of this third packet signal, due to containing more information, more information is lost, but due to said lost packet signal containing rather similar content information signals (speech vectors which look alike) it can still be reconstructed by interpolating at least one or more other packet signals situated in time before and/or after said lost packet signal.

Said similarity/non-similarity in for example two content information blocks as analysed by said analyser could be a real difference (or equality) bit per bit (in which case said analyser is a subtractor/adder per bit), or could be a numerical difference byte per byte (in which case said analyser is a subtractor/adder per byte), or could be a difference (or equality) in power (in which case said analyser comprises a further processors or forms part of said processor for calculating squares and roots), or could be - in case both content information blocks define values/amplitudes of frequency-components - a real difference (or equality) or a difference (or equality) in power per frequency-component (in which case said analyser is a subtractor per frequency-component), etc.

Said similarity/non-similarity in said first number of content information blocks does not exclude said first number being three or more. In case of said first number being three (with said selector having a fourth output coupled to via a third buffer to a third input of said analyser), for example either three pairs of content signals are analysed resulting in three indication signals or for example one of said content information blocks is doubled and then compared with a sum of the other two, etc. In case of said first number being four (with said selector having a fourth and a fifth output coupled to via a third and a fourth buffer to a third and a fourth input of said analyser), for example either six pairs of content signals are analysed resulting in six indication signals or for example one of said content information blocks is multiplied by three and then compared with a sum of the other three, or a sum of the first and second content information block is compared with a sum of the third and fourth content information block, or a difference between the first and the third content information block is compared with a difference between the second and the fourth content information block, etc. In case of said first number being five, etc.

Said analysis and/or analyses may be adjusted by said processor, for example in dependence of a mode, like name dialling, command & control, dictation respectively requiring a simple, an average and a profound analysis respectively. Further, said indication signal and/or said threshold signal may be adjusted by said processor, for example again in dependence of a mode. Said analysis and/or indication signal and/or threshold signal could further be adapted by said processor in response to network information regarding the quality of the transmission, for example.

Said processor system 6,7,8,9,10 may further comprise mmi 2 and/or converter 3 and/or memory 4 and/or selector 5 and/or buffer 11,12 and/or combiner 13, and may be located in for example a telecommunication network-unit (like for example a switch, a bridge, a router, a hub etc.), without mmi 2 and/or converter 3 being near. In that case, for example connection 21 and/or 22 and/or 23,24 form an input for receiving further packet signals for example via a network, whereby said further packet signals comprise further overhead information signals (like further headers) which either are to be converted into said overhead information signals (for example by said processor and/or by a separate header-converter) or are to be cut off (for example by said processor and/or by a separate cutter) in which case said overhead information signals are to be generated as described before.

All embodiments are just embodiments and do not exclude other embodiments not shown and/or described. All examples are just examples and do not exclude other examples not shown and/or described. Any (part of an) embodiment and/or any (part of an) example can be combined with any other (part of an) embodiment and/or any other (part of an) example.

Said construction can be amended without departing from the scope of this invention. Said units and/or blocks, as well as all other units and/or blocks shown and/or not shown, can be 100% hardware, or 100% software, or a mixture of both. Each unit and/or block can be integrated with a processor or any other unit and/or block, and each function of a processor can be realised by a separate unit and/or block.

For example, said indication signal generator and/or said threshold signal generator and/or said comparator may be partly or entirely be integrated with said processor. And said creation of packet signals in said combiner may be shifted into said transceiver, with said combiner then supplying overhead information signals and content information signals separately. And said combiner could partly or entirely be integrated with said transceiver. Further, more buffers could be present, for example between converter 3 and memory 4, and/or between selector 5 and combiner 13, etc. In case of said selector having a sufficient number of outputs each one coupled via a buffer to said analyser having a sufficient number of inputs, and/or in case of said selector having a sufficient number of outputs each one coupled to a buffer with all buffers via a further selector (multiplexer/demultiplexer) being coupled to said inputs of said analyser, and/or in case of said selector being in the form of a switch coupled to a sufficient number of buffers, said memory can be avoided. And in case of said memory having a sufficient number of outputs, said buffers can be avoided, etc. Finally, said analyser can partly or entirely be integrated with said processor, which is in particular interesting for analyses having a higher complexity.

It should be noted that said content information blocks to be analysed and/or to be combined not necessarily need to be subsequent blocks, it is not to be excluded that said processor system according to the invention temporarily combines non-subsequent blocks for efficiency reasons (said overhead information blocks will need to comprise information indicating this, and generally more and/or larger buffers will be required). Further, said analysis and/or analyses may be used for hustling several content information blocks and/or several packet signals in such a way that error correction will cost least effort (a most fluent subsequency allowing interpolation with best result).

Especially in an environment (like for example UDP) where (lost) packets are not retransmitted necessarily (compared to for example TCP), the invention is of great advantage.

The term 'similarity/non-similarity' comprises 'similarity', 'non-similarity', 'similarity or non-similarity', 'similarity and non-similarity', and/or 'similarity and/or non-similarity'.

The term 'audio/video' comprises 'audio', 'video', 'audio or video', 'audio and video', and/or 'audio and/or video'.

## Claims

1. Processor system for generating packet signals comprising content information blocks and overhead information blocks, **characterised in that** said processor system comprises a generator for generating at least one indication signal representing at least one similarity/non-similarity in at least a first number of content information blocks and comprises a comparator for comparing at least one indication signal with at least one threshold signal and, in dependence of at least one comparison result, combining at least a second number of content information blocks and one overhead information block into one packet signal, with said second number being equal to or smaller than said first number.

2. Processor system according to claim 1, **characterised in that** said processor system comprises a processor for, in response to receiving content information blocks, processing overhead information blocks.

3. Processor system according to claim 1 or 2, **characterised in that** said processor system comprises a man-machine-interface for receiving audio/video signals and a converter for converting said audio/video signals into said content information blocks.

4. Processor system according to claim 1 or 2, **characterised in that** said processor system comprises an input for receiving further packet signals comprising said content information blocks and further overhead information blocks.

5. Terminal comprising a man-machine-interface for receiving audio/video signals and a converter for converting said audio/video signals into content information blocks and a processor system for generating packet signals comprising said content information blocks and overhead information blocks, **characterised in that** said processor system comprises a generator for generating at least one indication signal representing at least one similarity/non-similarity in at least a first number of content information blocks and comprises a comparator for comparing at least one indication signal with at least one threshold signal and, in dependence of at least one comparison result, combining at least a second number of content information blocks and one overhead information block into one packet signal, with said second number being equal to or smaller than said first number.

6. Terminal according to claim 5, **characterised in that** said processor system comprises a processor for, in response to receiving said content information blocks, processing overhead information blocks.

7. Network-unit comprising an input for receiving further packet signals comprising content information blocks and further overhead information blocks and a processor system for generating packet signals comprising said content information blocks and overhead information blocks, **characterised in that** said processor system comprises a generator for generating at least one indication signal representing at least one similarity/non-similarity in at least a first number of content information blocks and comprises a comparator for comparing at least one indication signal with at least one threshold signal and, in dependence of at least one comparison result, combining at least a second number of content information blocks and one overhead information block into one packet signal, with said second number being equal to or smaller than said first number.

8. Network-unit according to claim 7, **characterised in that** said processor system comprises a processor for, in response to receiving said content information blocks and said further overhead information blocks, processing overhead information blocks.

9. Method for generating packet signals comprising content information blocks and overhead information blocks, **characterised in that** said method comprises a first step of generating at least one indication signal representing at least one similarity/non-similarity in at least a first number of content information blocks and comprises a second step of comparing at least one indication signal with at least one threshold signal and comprises a third step of, in dependence of at least one comparison result, combining at least a second number of content information blocks and one overhead information block into one packet signal, with said second number being equal to or smaller than said first number.

10. Method according to claim 9, **characterised in that** said method comprises a fourth step of, in response to receiving content information blocks, processing overhead information blocks.
